# EUROPEAN PATENT APPLICATION

(11) **EP 4 544 893 A1**
(43) Date of publication of application: **30.04.2025**
(21) Application number: 23831353.0
(22) Date of filing: 26.06.2023
(51) Int. Cl.: A01B 69/00, G05D 1/20

(54) **WORK VEHICLE**

(30) Priority: 28.06.2022 JP 2022103774
(71) Applicant: Kubota Corporation, Osaka 556-8601 (JP)
(72) Inventor: HAYASHI, Yosuke, Sakai-shi, Osaka 590-0908 (JP); MINAMIDE, Yuki, Sakai-shi, Osaka 590-0908 (JP); SAKANO, Tomoyoshi, Sakai-shi, Osaka 590-0908 (JP); TAKAKI, Takahiro, Sakai-shi, Osaka 590-0908 (JP); IWAMI, Kenichi, Sakai-shi, Osaka 590-0908 (JP); AMITANI, Kodai, Sakai-shi, Osaka 590-0908 (JP); TAKAKI, Go, Sakai-shi, Osaka 590-0908 (JP)
(74) Representative: Cabinet Beau de Loménie
(86) International application number: PCT/JP2023/023489
(87) International publication number: WO 2024/004911

(57) **Abstract**

A work vehicle includes a fuel cell module including a fuel cell stack, a motor connected to the fuel cell module, a travel device to be driven by the motor, a control device to control the motor, and a positioning system. The control device changes a manner of stopping the motor when a travel stop command is issued during motor operation, depending on whether the position of the work vehicle identified by the positioning system is within a field or not. The control device makes a time from when the travel stop command is issued until the motor stops shorter when the position of the work vehicle is within the field than when the position of the work vehicle is outside the field.

## Description

### TECHNICAL FIELD

The present disclosure relates to a work vehicle.

### BACKGROUND ART

In the field of motor vehicles, where the main purpose is to transport "people" or "objects," electric vehicles (EVs) are becoming increasingly popular. In these vehicles, the driving force (traction) is generated by an electric motor (hereinafter referred to as "motor") instead of an internal combustion engine.

On the other hand, there is a need to reduce the amount of carbon dioxide (CO₂) emitted by work vehicles, such as tractors used in agricultural fields, to realize a decarbonized society. Unlike typical automobiles, work vehicles such as tractors need to tow implements, which are work machines, to perform agricultural tasks such as plowing. Therefore, to achieve the electrification of work vehicles, there are issues to be solved that differ from those of passenger cars.

Patent Document 1 discloses a tractor that includes a fuel cell (FC) power generation system and a motor, while maintaining the structure of a conventional engine-driven tractor with minimal alteration.

### CITATION LIST

### PATENT LITERATURE

[Patent Document 1] Japanese Laid-Open Patent Publication No. 2002-225577

### SUMMARY OF INVENTION

### TECHNICAL PROBLEM

The present disclosure provides technology for improving stop control of a work vehicle equipped with a fuel cell module.

### SOLUTION TO PROBLEM

A work vehicle according to one aspect of the present disclosure includes a fuel cell module including a fuel cell stack, a motor connected to the fuel cell module, a travel device to be driven by the motor, a control device to control the motor, and a positioning system. The control device changes a manner of stopping the motor when a travel stop command is issued during driving of the motor, depending on whether a position of the work vehicle identified by the positioning system is within a field or not, and makes a time from when the travel stop command is issued until the motor stops shorter when the position of the work vehicle is within the field than when the position of the work vehicle is outside the field.

Comprehensive or specific aspects of the present disclosure may be achieved by apparatuses, systems, methods, integrated circuits, computer programs, or computer-readable non-transitory storage media, or any combination thereof. The computer-readable storage media may include volatile storage media or non-volatile storage media. The apparatuses may be configured with a plurality of devices. When the apparatuses are configured with two or more devices, the two or more devices may be arranged within a single equipment or may be arranged separately in two or more pieces of equipment.

### ADVANTAGEOUS EFFECTS OF INVENTION

According to embodiments of the present disclosure, it becomes possible to improve stopping control of a work vehicle equipped with a fuel cell module.

### BRIEF DESCRIPTION OF DRAWINGS

[FIG. **1**] A plan view schematically showing a basic configuration example of a work vehicle according to the present disclosure.
[FIG. **2**] A diagram showing a basic configuration example of a fuel cell power generation system mounted on the work vehicle.
[FIG. **3**] A block diagram schematically showing an example of electrical connections and power transmission between components of a work vehicle according to the present disclosure.
[FIG. **4**] A block diagram schematically showing paths of electrical signals (solid thin lines) and coolant paths (dotted lines) between components of a work vehicle according to the present disclosure.
[FIG. **5**] A perspective view schematically showing a configuration example of a work vehicle according to an embodiment of the present disclosure.
[FIG. **6**] A side view schematically showing a configuration example of a work vehicle according to the embodiment of the present disclosure.
[FIG. **7**] A block diagram schematically showing a configuration example of the positioning system.
[FIG. **8**] A flowchart showing an example of processing procedures for the operation of the control device.

### DESCRIPTION OF EMBODIMENTS

The following describes embodiments of the present disclosure. However, excessively detailed explanations may be omitted. For example, detailed explanations of well-known matters and repetitive explanations of substantially identical configurations may be omitted. This is to avoid the following description from becoming unnecessarily redundant and to facilitate understanding by those skilled in the art. The inventors provide the attached drawings and the following description to enable those skilled in the art to fully understand this disclosure, and do not intend to limit the subject matter described in the claims by these drawing and description. In the following description, the same reference numerals are used for components with the same or similar functions.

The following embodiments are illustrative and not limiting. The technologies disclosed herein are not restricted to the following embodiments. For instance, the numerical values, shapes, materials, steps, the order of those steps, screen layouts, and other elements shown in the following embodiments are merely examples. Various modifications can be made as long as no technical contradictions arise. Additionally, different features, elements, characteristics, etc., of the example embodiments may be combined as long as there are no technical contradictions.

In this disclosure, the term "work vehicle" refers to a vehicle used to perform a task at a work site. A "work site" includes any place where work is carried out, such as a field, forest, or construction site. A "field" refers to any place where agricultural work is performed, such as an orchard, farm, paddy field, grain farm, or pasture. A work vehicle may include an agricultural machine such as a tractor, rice planter, combine harvester, riding field management vehicle, or riding mower, as well as a non-agricultural vehicle such as a construction work vehicle or snowplow. The work vehicles described in this disclosure may be equipped with an implement (also called a "work machine" or "work device") attached to at least one of its front and rear portions, depending on the nature of the work. Travel of a work vehicle while performing a task may be referred to as "tasked travel."

An "agricultural machine" refers to a machine for agricultural application. Examples of agricultural machines include tractors, harvesters, rice planters, riding field management vehicles, vegetable transplanters, mowers, seeders, spreaders, and agricultural mobile robots. Not only may a work vehicle such as a tractor function as an "agricultural machine" on its own, but also the entire combination of a work vehicle and an implement attached to or towed by the work vehicle may function as an "agricultural machine." An agricultural machine performs agricultural work on the ground in a field, such as tilling, seeding, pest control, fertilizing, planting crops, or harvesting.

"Self-driving" refers to controlling the movement of agricultural machine through the function of a control device without manual operation by an operator. An agricultural machine performing self-driving may be referred to as an "self-driving agricultural machine" or a "robotic agricultural machine". During self-driving, not only the movement of the agricultural machinery but also agricultural work operations (e.g., implement operations) may be automatically controlled. When the agricultural machine is a vehicle-type machine, traveling of the agricultural machine by self-driving is referred to as "self-traveling". The control device may control at least one of steering, travel speed adjustment, and start and stop of movement necessary for the movement of the agricultural machine. When controlling a work vehicle with an implement attached, the control device may also control operations such as raising and lowering the implement, and starting and stopping the operation of the implement. Movement by self-driving may include not only movement of the agricultural machine along a predetermined path toward a destination, but also movement following a tracking target. Agricultural machine performing self-driving may partially move based on user instructions. Additionally, the agricultural machine performing self-driving may operate in a manual operation mode in which it moves by manual operation of the operator, in addition to the self-driving mode. Steering the agricultural machine through the function of the control device without manual operation is referred to as "automatic steering". A portion or entirety of the control device may be external to the agricultural machine. Communication of control signals, commands, or data may occur between the control device external to the agricultural machine and the agricultural machine. An agricultural machine performing self-driving may move autonomously while sensing the surrounding environment without human involvement in controlling the movement of the agricultural machine. The agricultural machine capable of autonomous movement can travel unmanned within the field or outside the field (e.g., on roads). During autonomous movement, obstacle detection and obstacle avoidance maneuvers may be performed.

An "environment map" is data that expresses the position or area of objects existing in the environment where the agricultural machine moves, using a predetermined coordinate system. The environment map may be simply referred to as a "map" or "map data". The coordinate system defining the environment map may be, for example, a world coordinate system such as a geographic coordinate system fixed to the Earth. The environment map may include information other than position (e.g., attribute information and other information) about objects existing in the environment. The environment map includes various types of maps such as point cloud maps or grid maps. Local maps or partial maps generated or processed in the process of constructing the environment map are also referred to as "maps" or "map data".

### 1. <Basic Configuration of Work Vehicle>

An example of the basic configuration and operation of a work vehicle according to the present disclosure will be described. The work vehicle described below includes a motor and a fuel cell power generation system (hereinafter referred to as "FC power generation system") that performs the power generation necessary to drive the motor.

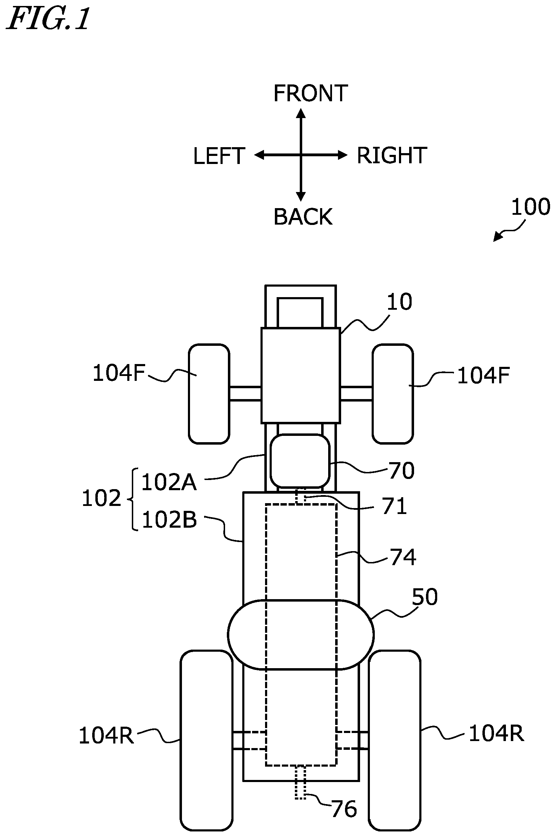

FIG. 1 is a schematic plan view showing an example of the basic configuration of a work vehicle 100 in this disclosure. In this disclosure, the direction in which the work vehicle 100 travels straight forward is called the "forward direction," and the direction in which it travels straight backward is called the "backward direction." In a plane parallel to the ground, the direction extending perpendicularly to the right of the "forward direction" is called the "right direction," and the direction extending perpendicularly to the left is called the "left direction." In FIG. **1****,** the "forward direction," "backward direction," "right direction," and "left direction" are indicated by arrows labeled "front," "back," "right," and "left" respectively. Both the forward and backward directions may be collectively referred to as the "front-back direction."

The work vehicle **100** illustrated in this example is, for instance, a tractor, which defines and functions as an example of agricultural machinery. The technologies disclosed herein are not limited to work vehicles such as tractors and may be applied to other types of work vehicles. The work vehicle **100** is configured to attach or tow an implement and travel within a field while performing agricultural tasks appropriate to the type of implement. Additionally, the work vehicle **100** is configured to travel both within and outside the field (including on roads) with the implement raised or without an implement attached.

The work vehicle **100,** like a conventional tractor, includes a vehicle frame **102** that rotatably supports left and right front wheels **104F** and left and right rear wheels **104R.** The vehicle frame **102** includes a front frame **102A** where the front wheels **104F** are mounted, and a transmission case **102B** where the rear wheels **104R** are mounted. The front frame **102A** is fixed to the front portion of the transmission case **102B.** The front wheels **104F** and rear wheels **104R** may be collectively referred to as wheels **104.** Strictly speaking, the wheels **104** refer to wheel rims with tires attached. In this disclosure, the term "wheel" generally refers to the entire assembly of the "wheel rim and tire." Either or both of the front wheels **104F** and rear wheels **104R** may be replaced with a plurality of wheels (crawler) equipped with endless tracks instead of wheels with tires. In this specification, the left and right front wheels **104F** and left and right rear wheels **104R,** the axles that rotate these four wheels, and the braking devices (brakes) that brake each axle may be collectively referred to as the "travel device."

In the example shown in FIG. **1****,** the work vehicle **100** includes a fuel cell module (FC module) **10** and a motor **70,** which are directly or indirectly supported by the front frame **102A.** The FC module **10** includes a fuel cell stack (FC stack) and functions as an onboard power generator that generates electricity from fuel, as will be described later. Hereinafter, the terms "FC module" or "FC stack" may simply be referred to as "fuel cell."

The motor **70** is electrically connected to the FC module **10.** The motor **70** converts the electric power generated by the FC module **10** into mechanical motion (power) to produce the driving force (traction) necessary for the work vehicle **100** to travel. An example of the motor **70** is an AC synchronous motor. Since the FC stack of the FC module **10** generates direct current, when the motor **70** is an AC synchronous motor, a group of electrical circuits, including an inverter device, is installed between the FC stack and the motor **70** to convert the direct current to alternating current. A portion of such electrical circuit group may be inside the FC module **10,** while another portion of the electrical circuit group may be attached to the motor **70** as a motor drive circuit.

The motor **70** includes an output shaft **71** that rotates. The torque of the output shaft **71** is transmitted to the rear wheels **104R** through mechanical components such as a transmission (gearbox) and a rear wheel differential gear device installed inside the transmission case **102B.** In other words, the power generated by the motor **70,** which serves as the power source, is transmitted to the rear wheels **104R** through a power transmission system (drivetrain) **74** including the transmission installed in the transmission case **102B.** For this reason, the "transmission case" may also be referred to as a "mission case." In four-wheel drive mode, a portion of the power of the motor **70** is also transmitted to the front wheels **104F.** The power of the motor **70** may be used not only to drive the work vehicle **100** but also to operate implements. Specifically, a power take-off (PTO) shaft **76** is provided at the rear end of the transmission case **102B.** The PTO shaft **76** is driven by the motor **70** and is configured to be connected to implements. The torque from the output shaft **71** of the motor **70** is transmitted to the PTO shaft **76.** Implements attached to or towed by the work vehicle **100** are configured to receive power from the PTO shaft **76** to perform various work-related operations. The motor **70** and the power transmission system **74** may collectively be referred to as an electric powertrain.

Thus, the work vehicle **100** disclosed herein does not include an internal combustion engine such as a diesel engine, but includes the FC module **10** and the motor **70.** Additionally, the output shaft **71** of the motor **70** is mechanically coupled to the power transmission system **74,** including the transmission in the transmission case **102B.** The motor **70** efficiently generates torque over a relatively wide range of rotational speeds compared to an internal combustion engine. However, by utilizing the power transmission system **74,** including the transmission, it becomes easier to adjust the torque and rotational speed from the motor **70** over an even wider range by performing multi-stage or continuously variable speed change operations. This configuration allows for efficient execution of not only the travel of the work vehicle **100** but also various operations using implements.

Depending on the application or size of the work vehicle **100,** some functions of the power transmission system **74** may be omitted. For example, a portion or an entirety of the transmission responsible for speed change functions may be omitted. The number and mounting position of motors **70** are also not limited to the example shown in FIG. **1****.**

The work vehicle **100** includes at least one fuel tank **50** that stores fuel to be supplied to the FC module **10.** For simplicity, FIG. **1** shows one fuel tank **50.** In some embodiments, a plurality of fuel tanks **50** may be housed in a tank case to define a fuel tank module. The fuel tank **50** is supported by structural elements fixed to the vehicle frame **102A** described later. The FC module **10** and the fuel tank **50** are connected by piping and open/close valves, and similar components, defining an FC power generation system mounted on a vehicle. The configuration and operation of the FC power generation system will be described later.

The work vehicle **100** in the embodiments described later includes a seat for a driver, hereinafter referred to as "a driver seat," supported by the vehicle frame **102.** The driver seat may be enclosed by a cabin supported by the vehicle frame **102.** In the embodiments described later, the FC module **10** is positioned in front of the driver seat, and the fuel tank **50** is positioned above the driver seat. Such FC module **10** and fuel tank **50** are housed in at least one "enclosure." The "enclosure" functions as a housing, for example, and plays a role in protecting the FC module **10** and fuel tank **50** from sunlight exposure and wind and rain. Additionally, such an enclosure is designed to control the spread of fuel gas into the atmosphere and to facilitate the detection of fuel gas when fuel gas leaks from the FC module **10** or fuel tank **50.**

The FC module **10** may be housed in a front housing called a "bonnet," for example. The front housing is a portion of the "enclosure." The front housing is supported by the front portion of the vehicle frame **102** (front frame **102A**). The fuel tank **50** is housed in a tank case, as mentioned earlier. The tank case is directly or indirectly supported by the vehicle frame **102.**

### 2. <FC Power Generation System>

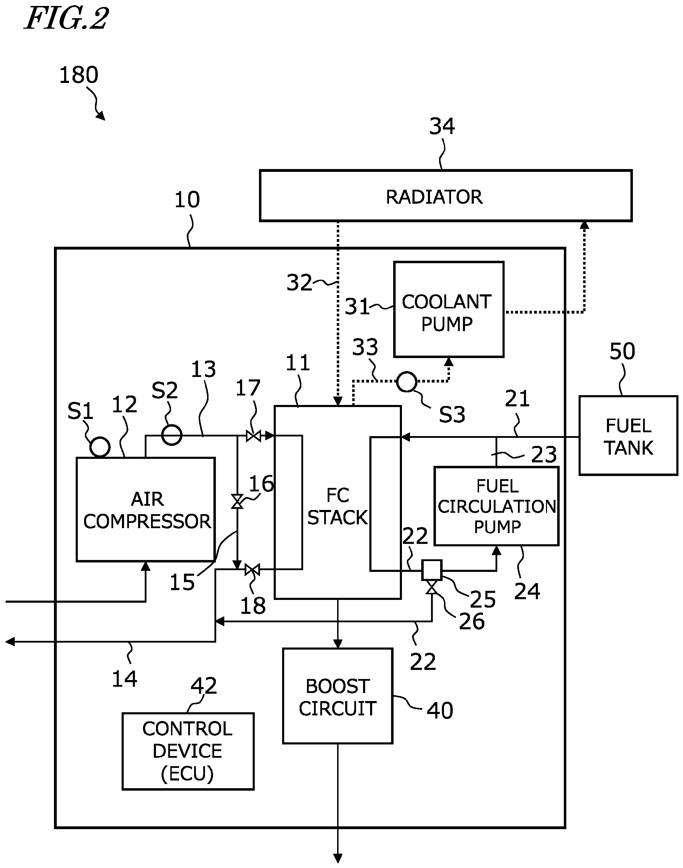

Next, referring to FIG. **2****,** a basic configuration example of the FC power generation system **180** mounted on the work vehicle **100** will be explained.

The FC power generation system **180** shown in FIG. **2** functions as an onboard power generation system in the work vehicle **100** of FIG. **1****.** The electric power generated by the FC power generation system **180** is used not only for the travel of the work vehicle **100** but also for the operation of implements towed or attached to the work vehicle **100.**

The FC power generation system **180** in the illustrated example includes the FC module **10** and at least one fuel tank **50** that stores fuel to be supplied to the FC module **10.** The FC power generation system **180** also includes a radiator device **34** to cool the FC module **10.**

The FC module **10** includes main components such as a fuel cell stack (FC stack) **11,** an air compressor **12,** a fuel circulation pump **24,** a coolant pump **31,** a boost circuit **40,** and a control device **42.** These components are housed within the casing of the FC module **10** and are connected to each other through electrical or fluid communication.

The FC stack **11** generates electric power through an electrochemical reaction between the fuel, referred to as "anode gas" and the oxidizing gas, referred to as "cathode gas." In this example, the FC stack **11** is composed of polymer electrolyte fuel cells. The FC stack **11** has a stack structure in which a plurality of single cells (fuel cell elements) are stacked. A single cell includes, for example, an electrolyte membrane formed from an ion exchange membrane, an anode electrode formed on one side of the electrolyte membrane, a cathode electrode formed on the other side of the electrolyte membrane, and a pair of separators sandwiching the anode electrode and cathode electrode on both sides. The voltage generated in a single cell is, for example, less than **1** volt. Therefore, in the FC stack **11,** for instance, more than **300** single cells are connected in series to generate a voltage of several hundred volts.

Anode gas is supplied to the anode electrode of the FC stack **11.** The anode gas is called "fuel gas" or simply "fuel." In the embodiments of this disclosure, the anode gas (fuel) is hydrogen gas. Cathode gas is supplied to the cathode electrode. The cathode gas is an oxidizing gas such as air. The anode electrode is called the fuel electrode, and the cathode electrode is called the air electrode.

At the anode electrode, the electrochemical reaction shown in the following equation (1) occurs.

2H₂ → 4H⁺ + 4e equation (1)

At the cathode electrode, the electrochemical reaction shown in the following equation (2) occurs.

4H⁺ + 4e + O₂ → 2H₂O equation (2)

Overall, the reaction shown in the following equation (3) occurs.

2H₂ + O₂ → 2H₂O equation (3)

The anode gas after being used in the above reaction is called "anode off-gas", and the cathode gas after being used in the reaction is called "cathode off-gas."

The air compressor **12** supplies air taken from the outside as cathode gas to the cathode electrode of the FC stack **11.** The cathode gas supply system including the air compressor **12** includes a cathode gas supply pipe **13,** a cathode off-gas pipe **14,** and a bypass pipe **15.** The cathode gas supply pipe **13** flows cathode gas (air) supplied from the air compressor **12** to the cathode electrode of the FC stack **11.** The cathode off-gas pipe **14** flows cathode off-gas discharged from the FC stack **11** to the outside air. The bypass pipe **15** branches from the cathode gas supply pipe **13** downstream of the air compressor **12,** bypasses the FC stack **11,** and connects to the cathode off-gas pipe **14.** A control valve **16** is provided on the bypass pipe **15** to adjust the flow rate of cathode gas flowing through the bypass pipe **15.** A shut-off valve **17** is provided on the cathode gas supply pipe **13** to selectively block the inflow of cathode gas to the FC stack **11.** A pressure regulating valve **18** is provided on the cathode off-gas pipe **14** to adjust the back pressure of the cathode gas.

The cathode gas supply system of the FC module **10** includes a rotation speed detection sensor **S1** that detects the rotation speed of the air compressor **12** and a gas flow rate detection sensor **S2** that detects the flow rate of cathode gas flowing through the cathode gas supply pipe **13.** The control valve **16,** shut-off valve **17,** and pressure regulating valve **18** are, for example, electromagnetic valves.

The fuel circulation pump **24** supplies fuel gas (anode gas) sent from the fuel tank **50** to the anode electrode of the FC stack **11.** The anode gas supply system including the fuel circulation pump **24** includes an anode gas supply pipe **21,** an anode off-gas pipe **22,** and a circulation path **23.** The anode gas supply pipe **21** flows anode gas supplied from the fuel tank **50** to the anode electrode of the FC stack **11.** In the embodiments of this disclosure, the fuel tank **50** is a hydrogen tank that stores high-pressure hydrogen gas.

The anode off-gas pipe **22** flows anode off-gas discharged from the FC stack **11.** The anode off-gas is led through the anode off-gas pipe **22** to a gas-liquid separator **25** in which moisture is removed. The anode off-gas with moisture removed returns to the anode gas supply pipe **21** through the circulation path **23** by the fuel circulation pump **24.** The anode off-gas circulating through the circulation path **23** can be discharged through the anode off-gas pipe **22** by opening an exhaust valve **26.** Moisture accumulated in the gas-liquid separator **25** can be discharged through the anode off-gas pipe **22** by opening the exhaust valve **26.** The exhaust valve **26** is, for example, an electromagnetic valve. In the example shown in the figure, the anode off-gas pipe **22** is connected to the cathode off-gas pipe **14.** By adopting this configuration, it is possible to improve the utilization efficiency of the anode gas by circulating the anode off-gas containing unreacted anode gas that did not contribute to the electrochemical reaction and supplying it again to the FC stack **11.**

To enhance the performance of the FC stack **11,** temperature control is important. When generating electricity through the reaction of producing water from hydrogen gas and oxygen gas, heat is also generated, necessitating cooling. FIG. **2** shows a coolant circulation system including a coolant pump **31** for the FC stack **11,** but as described later, cooling circulation systems for other electrical equipment may also be provided. Note that the air compressor **12,** fuel circulation pump **24,** and coolant pump **31** included in the FC module **10** are driven by individual built-in motors. These motors are also electrical equipment.

The coolant circulation system including the coolant pump **31** shown in FIG. **2** includes a coolant supply pipe **32,** a coolant discharge pipe **33,** a radiator device **34,** and a temperature sensor **S3.** This coolant circulation system is configured to adjust the temperature of the FC stack **11** within a predetermined range by circulating coolant through the FC stack **11.** The coolant is supplied to the FC stack **11** through the coolant supply pipe **32.** The supplied coolant flows through a coolant path between single cells and is discharged into the coolant discharge pipe **33.** The coolant discharged into the coolant discharge pipe **33** flows to the radiator device **34.** The radiator device **34** performs heat exchange between the incoming coolant and the outside air to release heat from the coolant, and then resupplies the cooled coolant to the coolant supply pipe **32.**

The coolant pump **31** is provided on either the coolant supply pipe **32** or the coolant discharge pipe **33** to pump coolant to the FC stack **11.** A coolant bypass flow path may be provided between the coolant discharge pipe **33** and the coolant supply pipe **32.** In that case, a flow dividing valve is provided at the branching point at which the coolant bypass flow path branches from the coolant discharge pipe **33.** The flow dividing valve is configured to adjust the flow rate of coolant flowing through the bypass flow path. The temperature sensor **S3** detects the temperature of the coolant flowing through the coolant discharge pipe **33.**

The coolant used to cool the FC stack **11** is circulated through the flow path by an electric coolant pump **31.** A coolant control valve may be provided downstream of the FC stack **11.** The coolant control valve adjusts the ratio of coolant flowing to the radiator device **34** and coolant bypassing the radiator device **34,** enabling more accurate control of the coolant temperature. Furthermore, by controlling the liquid delivery amount by the coolant pump, it is also possible to control the coolant temperature difference between the inlet and outlet of the FC stack **11** to be within a desired range. The temperature of the coolant in the FC stack **11** may be controlled to be around 70°C, for example, which is a temperature where the power generation efficiency of the FC stack **11** is high.

The coolant flowing through the FC stack 11 preferably has higher insulation properties compared to the coolant used to cool ordinary electrical equipment. Since voltages exceeding 300 volts can occur in the FC stack **11,** increasing the electrical resistance of the coolant allows for the suppression of current leakage through the coolant or devices such as the radiator device **34.** The electrical resistance of the coolant may decrease as the coolant is used. This is because ions dissolve into the coolant flowing through the FC stack **11.** To remove such ions from the coolant and increase insulation property, it is desirable to place an ion exchanger in the coolant flow path.

The boost circuit **40** is configured to increase the voltage output by the FC stack **11** through power generation to a desired level. The subsequent stage of the boost circuit **40** is connected to the high-voltage electrical circuit including an inverter device for motor drive. The subsequent stage of the boost circuit **40** may also be connected in parallel to the low-voltage electrical circuit via a step-down circuit.

The control device **42** may include an electronic control unit (ECU) configured or programmed to control power generation by the FC module **10.** The control device **42** detects or estimates the operating state of the FC power generation system **180** based on signals output from various sensors. The control device **42** is configured or programmed to control power generation by the FC stack **11** by regulating the operation of the air compressor **12,** fuel circulation pump **24,** coolant pump **31,** and various valves, based on the operating state of the FC power generation system **180** and instructions output from a primary computer or other ECUs. The control device **42** includes, for example, a processor, a storage device, and an input/output interface.

In the following description, for simplicity, "anode gas" may be referred to as "fuel gas" or "fuel," and "anode gas supply pipe" may be referred to as "piping."

### 3. <Configuration Example of System of Work Vehicle>

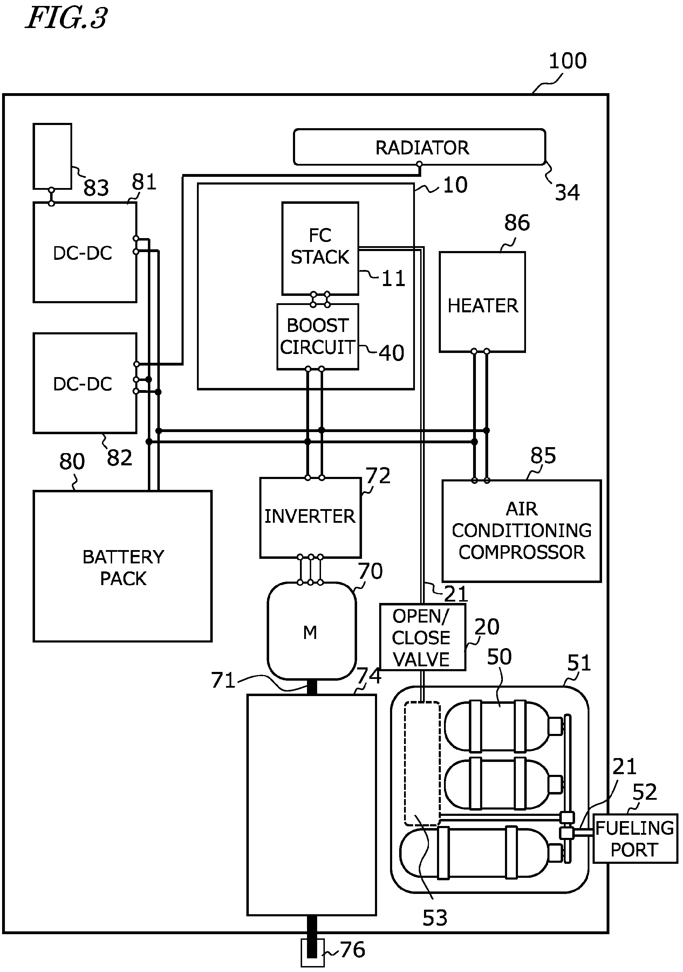

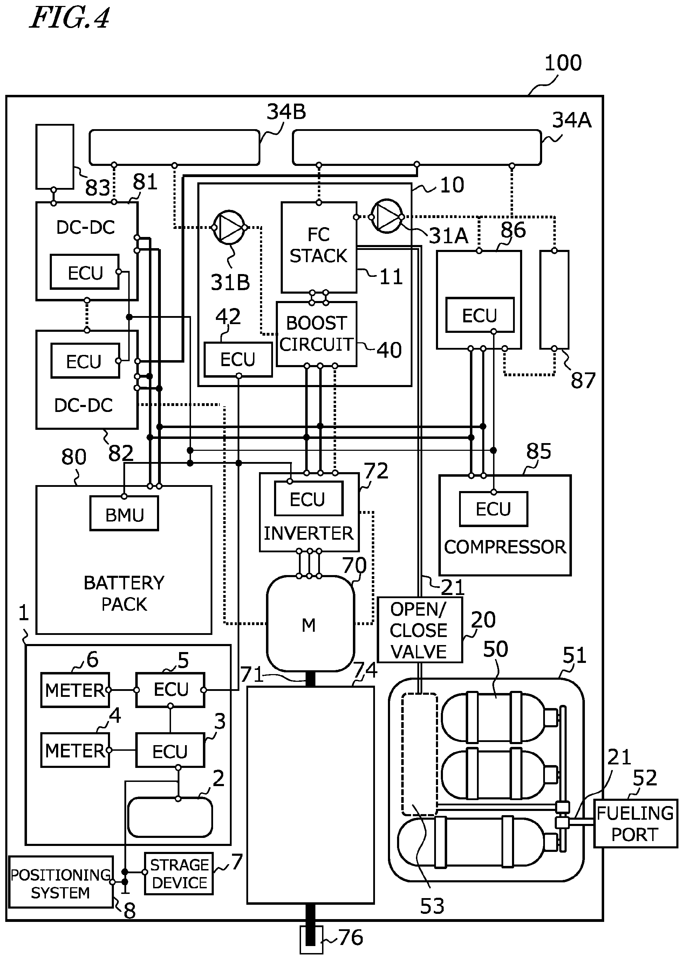

Next, referring to FIGS. **3** and **4****,** a configuration example of the system of the work vehicle **100** according to this disclosure will be described. FIG. **3** is a block diagram schematically showing an example of electrical connections and power transmission between components of the work vehicle **100** according to this disclosure. FIG. **4** is a block diagram showing a more detailed configuration than the example in FIG. **3****.** FIG. **4** schematically shows the paths of electrical signals (thin solid lines) and coolant (dotted lines) between components in the work vehicle **100.**

First, referring to FIG. **3****,** an example of the electrical connections and power transmission between components will be described. Electrical connections include both high-voltage and low-voltage systems. High-voltage electrical connections provide, for example, the power supply voltage for inverter devices. Low-voltage electrical connections provide, for example, the power supply voltage for electronic components that operate at relatively low voltages.

In the example shown in FIG. **3****,** the work vehicle **100** includes an FC module **10,** an inverter device **72,** a motor **70,** a power transmission system **74,** and a PTO shaft **76.** The DC voltage of the power generated in the FC stack **11** of the FC module **10** is boosted by the boost circuit **40** and then supplied to the inverter device **72.** The inverter device **72** converts the DC voltage into, for example, a three-phase AC voltage and supplies it to the motor **70.** The inverter device **72** includes a bridge circuit including a plurality of power transistors. The motor **70** includes a rotating rotor and a stator with a plurality of coils electrically connected to the inverter device **72.** The rotor is coupled to the output shaft **71,** for example, via a reduction gear (speed reducer) or directly. The motor **70** rotates the output shaft **71** with torque and rotational speed controlled according to the waveform of the three-phase AC voltage from the inverter device **72.**

The work vehicle **100** further includes a control device (ECU) **72A** that controls the motor **70.** The control device **72A** is connected to the inverter device **72** and controls the switching operation (turn-on or turn-off) of each of a plurality of power transistors included in the bridge circuit of the inverter device **72.** The control device **72A** may be connected to the inverter device **72** via a pre-driver (which may be referred to as a "gate driver"). The control device **72A** may operate under the control of a primary computer.

The torque of the output shaft **71** of the motor **70** is transmitted to the power transmission system **74.** The power transmission system **74** operates with the motor **70** as the power source to drive the wheels **104R** and **104F,** as shown in FIG. **1****,** and/or the PTO shaft **76.** This power transmission system **74** may have the same or a similar structure as the power transmission system in conventional tractors including internal combustion engines such as diesel engines. By adopting a power transmission system used in agricultural tractors, for example, it is possible to reduce the design and manufacturing costs for producing an agricultural work vehicle **100** including an FC power generation system. The power transmission system **74** includes a travel power transmission mechanism that transmits power from the motor **70** to the left and right rear wheels **104R** through a clutch, transmission, and rear wheel differential device, as well as a PTO power transmission mechanism that transmits power from the motor **70** to the PTO shaft **76.** The transmission case **102B** in FIG. **1** may be divided into a front case (mission case) housing the clutch and transmission and related components, and a rear case (differential gear case) housing the rear wheel differential device and related components. The rear case may also be referred to as a rear axle case.

The work vehicle **100** includes a secondary battery (battery pack) **80** that temporarily stores electrical energy generated by the FC module **10.** An example of the battery pack **80** includes a pack of lithium-ion batteries. The battery pack **80** is electrically connected to the FC module **10** and electrically connected to the motor **70** via the inverter device **72.** The battery pack **80** is configured to supply power to the inverter device **72** at the necessary timing in cooperation with the FC module **10** or independently. Various battery packs used in electric passenger vehicles may be adopted as the battery pack **80.** Hereinafter, the battery pack 80 may be simply referred to as "battery **80."**

The work vehicle **100** includes various electrical equipment (onboard electronic components) that operates on electricity, in addition to the motor **70** and the inverter device **72.** Examples of electrical equipment include electromagnetic valves such as open/close valves **20,** air cooling fans of the radiator device **34,** electric pumps of air conditioning compressors **85,** and temperature control devices for heating or cooling the FC stack **11.** The temperature control devices include electric heaters **86.** First and second DC-DC converters **81** and **82** to obtain appropriate power supply voltages for the operation of electrical equipment, and storage batteries **83** may also be included in the electrical equipment. Furthermore, various electronic components not shown (such as lamps, electric motors for hydraulic systems) may be included in the electrical equipment. The electrical equipment may be electronic components similar to electrical equipment installed in conventional agricultural tractors.

In the example of FIG. **3****,** the first DC-DC converter **81** is a circuit that steps down the voltage output from the boost circuit **40** of the FC module **10** to a first voltage, for example, 12 volts. The storage battery **83** is, for example, a lead-acid battery and stores electrical energy at the voltage output from the first DC-DC converter **81.** The storage battery **83** may be used as a power source for various electrical equipment such as lamps.

The work vehicle **100** shown in FIG. **3** includes not only the first DC-DC converter **81** but also a second DC-DC converter **82** as a voltage conversion circuit that steps down the high voltage output by the FC module **10.** The second DC-DC converter **82** is a circuit that steps down the voltage output from the boost circuit **40** of the FC module **10** (for example, several hundred volts) to a second voltage higher than the first voltage, for example, 24 volts. The air cooling fan of the radiator device **34,** for example, is configured to operate on the voltage output from the second DC-DC converter **82.** Note that although the radiator device **34** is described as a single component in FIG. **3****,** one work vehicle 100 may include a plurality of radiator devices **34.** Additionally, the electric pump of the air conditioning compressor **85** and the electric heater **86** are configured to operate on the voltage output from the second DC-DC converter **82.**

The work vehicle **100** shown in FIG. **3** includes a temperature control device that cools or heats the FC stack **11** included in the FC power generation system. The operation of the temperature control device or alike requires relatively large power. The relatively high 24-volt voltage output by the second DC-DC converter **82** is applied to the temperature control device. In this embodiment, the temperature control device includes the radiator device **34** that releases heat from the coolant cooling the FC stack **11,** and the relatively high 24-volt voltage (second voltage) output by the second DC-DC converter **82** is applied to the radiator device **34.** The temperature control device includes a heater **86** that heats the FC stack **11.** The relatively high voltage output by the second DC-DC converter **82** may also be applied to the heater. The relatively high voltage output by the second DC-DC converter **82** may also be applied to air conditioning devices such as the air conditioning compressor **85.**

The work vehicle **100** may include a third voltage conversion circuit that converts the high voltage output by the FC module **10** to a third voltage higher than the second voltage. The third voltage is, for example, 48 volts. If the work vehicle **100** includes another motor in addition to the motor **70,** for example, the third voltage may be used as the power source for such other motors.

In an agricultural work vehicle including a fuel cell power generation system, in addition to the electrical equipment necessary for agricultural task, the agricultural work vehicle also includes electrical equipment necessary for the operation of fuel cell power generation, so the appropriate voltage magnitude may differ for each electrical equipment. According to the embodiments of this disclosure, it is possible to supply voltages of appropriate magnitudes.

In the example shown in FIG. **3****,** a plurality of fuel tanks **50** are housed in a single tank case **51.** The fuel tank **50** is connected to a supplying port (fueling port) **52** through which fuel is supplied from the outside. This connection is made via piping **21** for flowing fuel gas. The fuel tank **50** is also connected to the FC module **10** via piping **21,** which is equipped with an open/close valve **20.** When hydrogen is used as the fuel gas, the piping **21** may be formed from materials with high resistance to hydrogen embrittlement, such as austenitic stainless steel like SUS316L.

A valve space **53** is provided in the tank case **51,** and various valves including a pressure reducing valve are placed in the valve space **53.** Through various valves provided in the valve space **53,** the piping **21** connects the fuel tank 50 and the FC module **10.** Fuel gas with reduced pressure by the pressure reducing valve flows through the piping **21** connecting the tank case **51** and the FC module **10.** When the fuel gas is hydrogen gas, high-pressure hydrogen gas of, for example, 35 megapascals or more may be filled in the fuel tank **50,** but the hydrogen gas after passing through the pressure reducing valve may be reduced to about 2 atmospheres or less.

Next, refer to FIG. **4****.** In addition to what is shown in FIG. **3****,** FIG. **4** shows a plurality of ECUs that communicate within the work vehicle **100** and a user interface **1.** Communication can be executed via CAN bus wiring and other similar communication pathways, which function as paths for electrical signals (thin solid lines). FIG. **4** also shows a cooling system to perform thermal management of components. Specifically, the path of coolant (dotted line) is schematically shown.

As mentioned above, the first and second DC-DC converters **81** and **82** are configured to output voltages of different magnitudes. ECUs are also provided for these first and second DC-DC converters **81** and **82** to control each voltage conversion circuit. The relatively low first voltage which the first DC-DC converter **81** outputs is applied to these ECUs, like other ECUs.

In the example of FIG. **4****,** the work vehicle **100** includes a cooling system in which coolant circulates via coolant pumps **31A** and **31B.** These coolant pumps **31A** and **31B** are provided inside the FC module **10.** The cooling system in this example includes a first radiator device **34A** responsible for cooling the FC stack **11** and a second radiator device **34B** to cool other electrical equipment. The cooling system includes a flow path (first flow path) where coolant flows between the FC stack **11** and the first radiator device **34A.** Furthermore, this cooling system has a flow path (second flow path) where coolant flows between electrical equipment including the motor **70** and the second radiator device **34B.** In the example of FIG. **4****,** for instance, a heater core **87** used to heat the cabin is provided, and the coolant flowing through the first radiator device **34A** flows through the heater core **87.**

The user interface **1** includes an operation device **2** such as an accelerator pedal (or accelerator lever) and a main ECU **3** connected to the operation device **2.** The main ECU **3** is communicably connected via a bus to a main meter **4,** a storage device **7,** a positioning system **8,** and similar components. The storage device **7** and positioning system **8** will be described later. The main meter **4** may display various parameters that identify the travel state or operating state of the work vehicle **100.** The user interface **1** further includes an FC system ECU **5** to control the FC power generation system. The FC system ECU **5** is connected to an FC meter **6.** The FC meter **6** may display various parameters that identify the operating state of the FC power generation system.

The storage device **7** includes one or more storage media such as flash memory or magnetic disks. The storage device **7** stores various data generated by the main ECU **3** and FC system ECU **5.** The storage device **7** also stores computer programs that cause the main ECU **3** and FC system ECU **5** to perform desired operations. The computer programs may be provided to the work vehicle **100** via storage media (e.g., semiconductor memory or optical discs) or telecommunication lines (e.g., the Internet). The computer programs may be sold as commercial software.

The work vehicle **100** may further include a positioning system **8.** The positioning system **8** includes, for example, a GNSS (Global Navigation Satellite System) receiver used for positioning, and an external sensor that senses the external state of the work vehicle **100.** An example of the block configuration of the positioning system **8** will be described later.

The cells of the battery pack **80** are controlled by a Battery Management Unit (BMU). The BMU includes circuits and a CPU (Central Processing Unit) that perform voltage monitoring for each cell of the battery, monitoring of overcharging and over-discharging, and cell balance control. These circuits and CPU may be mounted on a battery controller board.

### 4. <Embodiments>

### (4.1 Basic Configuration of Work Vehicle)

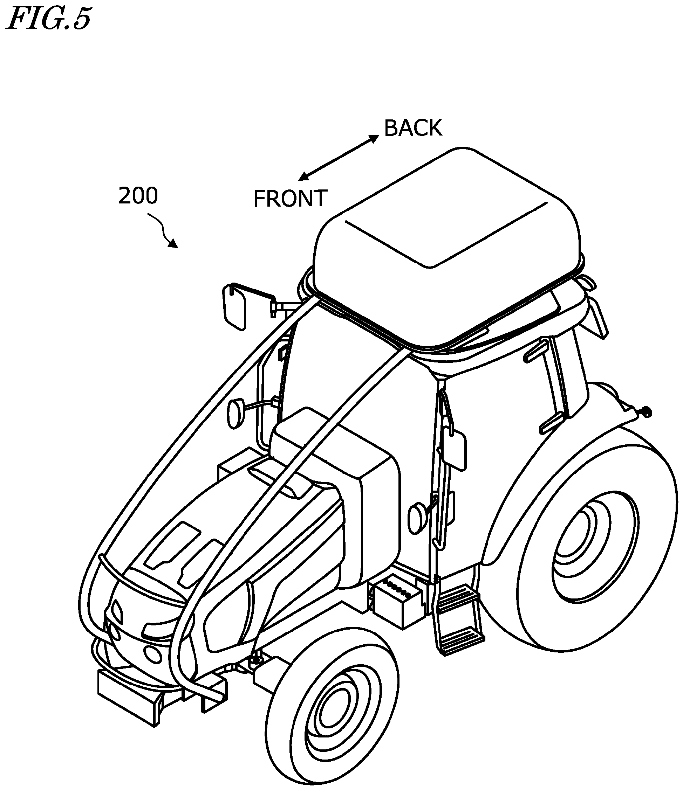

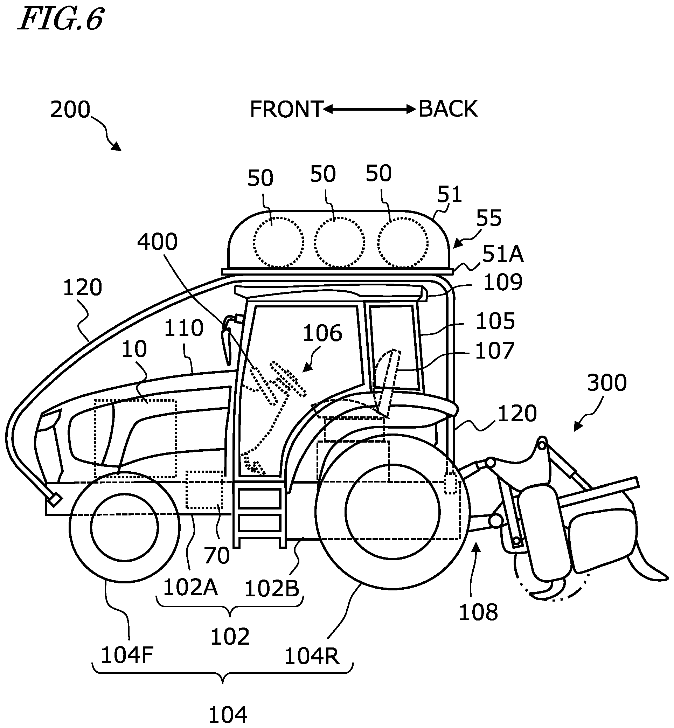

Next, referring to FIGS. **5** and **6****,** the basic configuration of the work vehicle according to the embodiments of this disclosure will be explained. FIG. **5** is a perspective view schematically showing a configuration example of the work vehicle **200** in this embodiment. FIG. **6** is a side view schematically showing a configuration example of the work vehicle **200** in this embodiment.

The work vehicle **200** of this embodiment includes an FC module **10,** a fuel tank **50,** a motor **70,** a driver seat **107,** a vehicle frame **102,** a control device, and a traveling device. The work vehicle **200** includes a configuration similar to that of the work vehicle **100** described with reference to Fig. **1****.**

In the following description, a plurality of ECUs involved in system control of the work vehicle **200,** including the main ECU **3,** FC system ECU **5,** and ECU **72A,** are collectively referred to as the "control device". The ECU includes a storage device (ROM) and may further include, for example, an FPGA (Field Programmable Gate Array) and/or a GPU (Graphics Processing Unit). One ECU alone, or a plurality of ECUs working together, sequentially execute computer programs stored in the storage device that describe instruction sets for executing at least one process, while communicating with a primary computer, to perform desired operations.

The work vehicle **200** of this embodiment further includes a positioning system **8** (see Fig. **4**) and an operation terminal **400.** The operation terminal **400** is a terminal for a user to perform operations related to the travel of the work vehicle and the operation of implements, and is also referred to as a virtual terminal (VT). The operation terminal **400** may include a touch screen type display device and/or one or more buttons. The display device may be, for example, a liquid crystal or organic light-emitting diode (OLED) display.

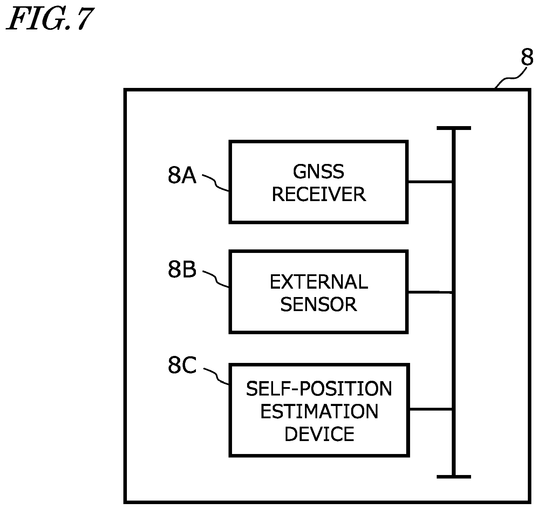

Fig. **7** is a schematic block diagram showing an example configuration of the positioning system **8.** The positioning system **8** exemplified in Fig. **7** includes a GNSS receiver **8A,** an external sensor **8B,** and a self-position estimation device **8C.** The positioning system **8** may further include an RTK (Real Time Kinematic) receiver and an inertial measurement unit (IMU).

The GNSS receiver **8A** includes, for example, an antenna and a GNSS receiver. The GNSS receiver **8A** receives satellite signals transmitted from a plurality of GNSS satellites and generates GNSS data based on the satellite signals. The GNSS data is generated in a predetermined format, for example, the NMEA-0183 format. The GNSS data may include, for example, values indicating the identification number, elevation angle, azimuth angle, and reception strength of each satellite from which satellite signals are received.

The external sensor **8B** outputs sensor data indicating the distribution of objects present in the surroundings of the work vehicle **200.** Examples of external sensors include LiDAR sensors, cameras (or image sensors), laser range finders (also referred to as "scanning distance sensors"), ultrasonic sensors, millimeter-wave radars, and magnetic sensors.

The self-position estimation device **8C** is a device that performs estimation of the position and orientation of the work vehicle **200** (self-position estimation) using sensor data output from the external sensor **8B.** For self-position estimation, algorithms such as SLAM may be used. The self-position estimation device **8C** may be implemented by an ECU. In this embodiment, the self-position estimation device **8C** estimates the position of the work vehicle **200** by matching sensor data output from the external sensor **8B** with an environmental map. The matching may be performed using any matching algorithm such as NDT (Normal Distribution Transform) or ICP (Iterative Closest Point).

In this embodiment, the fuel tank **50** is supported by a mounting frame **120.** The mounting frame **120** is fixed to the vehicle frame **102** across the driver seat **107.** The fuel tank **50** is positioned above the driver seat **107.** However, the installation location of the fuel tank **50** is not limited to the illustrated example and may be, for example, inside the front housing **110.**

In this embodiment, the mounting frame **120** is an elongated structure such as a pipe fixed to the vehicle frame **102.** The mounting frame **120** includes two frames positioned on the left and right sides of the work vehicle **200** (see Fig. **5**). The front portion of the mounting frame **120** has a curved shape. However, the shape of the mounting frame **120** shown is just an example, and the shape of the mounting frame **120** is not limited to this example.

In this embodiment, the vehicle frame **102** includes a front frame **102A** that rotatably supports the front wheels **104F** and a transmission case **102B** that rotatably supports the rear wheels **104R.** One end (front end) of the mounting frame **120** is fixed to the front frame **102A.** The other end (rear end) of the mounting frame **120** is fixed to the transmission case **102B.** These fixations may be done by appropriate methods such as welding or bolt joining, depending on the material of the mounting frame **120**.The mounting frame **120** may be formed from metal, synthetic resin, carbon fiber, or composite materials such as carbon fiber reinforced plastic or glass fiber reinforced plastic. The transmission case **102B** includes a rear axle case, and the rear end of the mounting frame **120** may be fixed to the rear axle case. When the mounting frame **120** is formed from metal, a portion or entirety of its surface may be covered with synthetic resin.

As shown in FIG. **6****,** the work vehicle **200** includes a cabin **105** surrounding the driver seat **107** between the vehicle frame **102** and the mounting frame **120.** The driver seat **107** is located in the rear portion of the interior of the cabin **105.** In front of the driver seat **107,** for example, a steering wheel **106** to change the direction of the front wheels **104F** and an operation terminal **400** are provided. The cabin **105** includes a cabin frame that defines its skeleton. A roof **109** is provided on the upper portion of the cabin frame. The cabin frame in this embodiment is a 4-pillar style. The cabin **105** is supported by the transmission case **102B** of the vehicle frame **102,** for example, via vibration-isolating mounts. The user interface **1** described with reference to FIG. **4** is provided inside the cabin **105.** Since the cabin **105** does not directly support the fuel tank **50,** there is no need to specially increase its strength, and a cabin that has been used in conventional tractors may be adopted.

The work vehicle **200** includes a placement platform **51A** that connects the left frame **120** and the right frame **120.** The fuel tank **50** can be positioned on the placement platform **51A.** When there are a plurality of fuel tanks **50,** the plurality of fuel tanks **50** may be provided in a fuel tank module **55.** As shown in FIG. **6****,** the fuel tank module **55** includes a tank case **51** that houses a plurality of fuel tanks **50.** The left and right mounting frames **120** may be connected to each other by members other than the placement platform **51A_{∘}**

A coupling device **108** is provided at the rear end of the transmission case **102B,** which defines the rear portion of the vehicle frame **102.** The coupling device **108** includes, for example, a three-point support device (referred to as a "three-point link" or "three-point hitch"), a PTO shaft, a universal joint, and a communication cable. The implement **300** can be attached to or detached from the work vehicle **200** using the coupling device **108.** The coupling device **108** can, for example, raise and lower the three-point link by a hydraulic device to change the position or posture of the implement **300.** Additionally, power can be transmitted from the work vehicle **200** to the implement **300** via the universal joint. The work vehicle **200** can execute predetermined work (agricultural task) with the implement **300** while pulling the implement **300.** The coupling device **108** may be provided on the front portion of the vehicle frame **102,** in which case the implement **300** can be connected to the front of the work vehicle **200.**

The implement **300** may include, for example, a drive device, a control device, and a communication device. The drive device performs operations necessary for the implement **300** to execute predetermined work. The drive device includes devices appropriate for the application of the implement **300,** such as hydraulic devices, electric motors, or pumps. The control device controls the operation of the drive device. The control device causes the drive device to perform various operations in response to signals transmitted from the work vehicle **200** via the communication device. The communication device can also transmit signals corresponding to the state of the implement **300** to the work vehicle **200.**

The implement **300** shown in Fig. **6** is a rotary tiller, but the implement **300** is not limited to a rotary tiller. For example, any implement such as a seeder, a spreader (fertilizer applicator), a transplanter, a mower, a rake, a baler, a harvester, a sprayer, or a harrow can be connected to and used with the work vehicle **200.**

The work vehicle **200** shown in Fig. **6** is capable of both manned operation and unmanned operation, but it may also be configured for unmanned operation only. In that case, components necessary only for manned operation, such as the cabin **105,** steering wheel **106,** and driver seat **107,** may not be provided on the work vehicle **200.**

The work vehicle may be equipped with an automatic driving function. That is, the work vehicle can travel by the action of the control device without manual operation. The work vehicle **200** of this embodiment can operate in both manual driving mode and self-driving mode. In the self-driving mode, the work vehicle **200** is configured to travel unmanned. The work vehicle **200** which is unmanned is configured to travel autonomously or by remote control by a user.

The work vehicle **200** is capable of self-driving both inside and outside the field (e.g., on roads). When the work vehicle **200** performs self-driving, the control device may perform calculations and control to achieve in cooperation with the positioning system **8.** In other words, the control device may perform self-driving control of the work vehicle **200** based on the estimated position of the work vehicle **200.**

An example of self-driving control of the work vehicle is described in detail in the unpublished patent application filed by the present applicant, Japanese Patent Application No. 2022-097611. The entire disclosure of Japanese Patent Application No. 2022-097611 is incorporated herein by reference.

### (4.2. Stop Control of Work Vehicle)

In this embodiment, the control device changes the manner of stopping the motor **70** when a travel stop command is issued during driving of the motor **70,** depending on whether the position of the work vehicle **200** identified by the positioning system **8** is within the field or not. Specifically, the control device makes the time from when the travel stop command is issued until the motor **70** stops shorter when the position of the work vehicle **200** is within the field than when the position of the work vehicle **200** is outside the field.

The time from when the travel stop command is issued until the motor **70** stops when the position of the work vehicle **200** is outside the field is referred to as the "first stop time". The time from when the travel stop command is issued until the motor **70** stops when the position of the work vehicle **200** is within the field is referred to as the "second stop time". The second stop time is shorter than the first stop time.

In this embodiment, the travel stop command may be issued, for example, from the FC system ECU **5,** or a primary computer that communicates with the FC system ECU **5,** to the main ECU **3** or the ECU **72A** that controls the driving of the motor **70.** Alternatively, the travel stop command may be issued from the main ECU **3** to the ECU **72A.**

The FC meter **6** is configured to display indicators that indicate the operating state of the FC power generation system **180.** The display on the FC meter **6** may include, for example, an indicator to notify abnormalities in the FC power generation system **180,** and indicators such as a water temperature gauge to indicate the state of the radiator device (e.g., temperature measured by the temperature sensor **S3).**

A pressure sensor may be provided in the fuel tank **50** to measure the remaining amount of fuel in the fuel tank **50.** Furthermore, a temperature sensor may be provided to measure the temperature inside the fuel tank **50.** For example, the FC system ECU **5** acquires sensor data output from the temperature sensor of the fuel tank **50** and measures the temperature of the fuel tank **50** based on the sensor data. Furthermore, the FC system ECU **5** acquires sensor data output from the pressure sensor of the fuel tank **50** and measures the pressure (residual pressure) of the fuel in the fuel tank **50** based on the sensor data.

The FC system ECU **5** determines whether each of the temperature of the fuel tank **50** and the pressure of the fuel is within a normal range. When either the temperature of the fuel tank **50** or the pressure of the fuel is not within the normal range, the FC system ECU **5** may, for example, turn on or flash an indicator notifying an abnormality in the FC power generation system **180.** For example, a stop button for emergency stopping of the work vehicle 200 during automatic travel may be displayed on the screen of the operation terminal **400.** When a driver seated in the driver seat **107** who notices the lighting or flashing of the indicator presses this stop button or a switch provided in the cabin **105,** the main ECU **3,** for example, issues a travel stop command to the ECU **72A** in response to this press. The ECU **72A** stops the motor **70** in response to the travel stop command.

In another example, when a user performing remote operation using a terminal device presses a stop button displayed on the terminal device, the main ECU **3,** for example, may issue a travel stop command to the ECU **72A** in response to this press. Alternatively, when the FC system ECU **5** detects an abnormality in the FC power generation system **180,** it may issue a travel stop command to, for example, the ECU **72A.** The ECU **72A** stops the motor **70** in response to the travel stop command. In this manner, in this embodiment, during the driving of the motor **70,** a travel stop command is issued mainly for emergency stopping when an abnormality in the FC power generation system **180** is detected. However, the issuance of the travel stop command is not limited to when an abnormality occurs in the FC power generation system. A travel stop command may be issued when the stop button is pressed. Alternatively, for example, a travel stop command may be issued to stop the work vehicle in place when an obstacle is detected by the positioning system during self-traveling in the field.

As shown in Fig. **3****,** the work vehicle **200** of this embodiment includes a first switch **R1** provided in the current path between the FC module **10** and the motor **70.** The work vehicle **200** may further include a second switch **R2** provided in the current path between the battery **80** and the motor **70.** Examples of the first switch **R1** and the second switch **R2** are relays. The on/off control of each of the first switch **R1** and the second switch **R2** is performed by, for example, the FC system ECU **5.** By turning off the first switch **R1,** power supply from the FC module **10** to the motor **70** is shut off. By turning off the second switch **R2,** power supply from the battery **80** to the motor **70** is shut off.

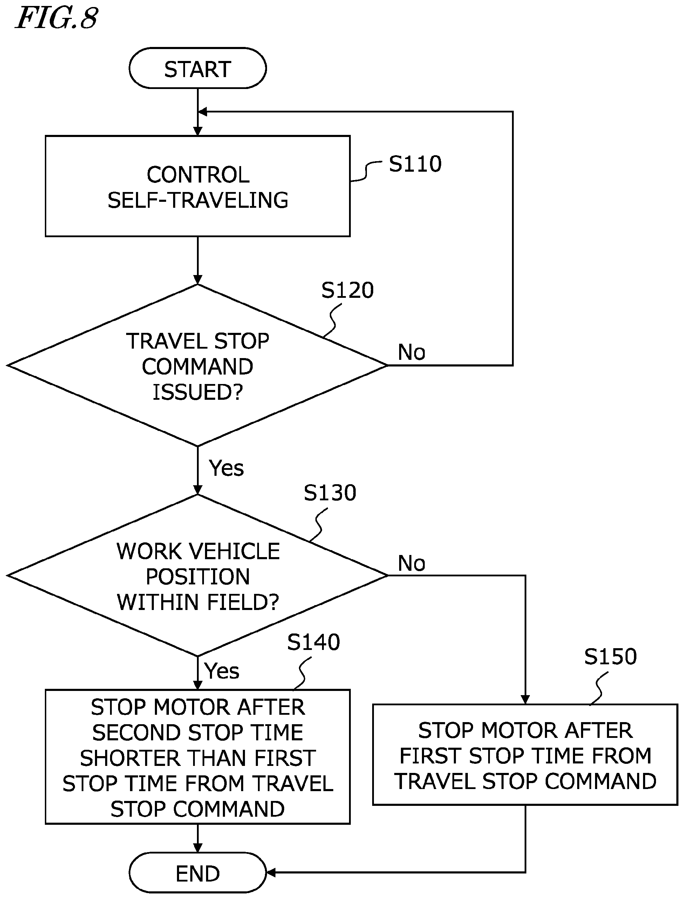

Fig. **8** is a flowchart showing an example of the processing procedure of the operation of the control device.

The control device executes automatic travel control based on sensor data output from the positioning system **8,** in cooperation with the positioning system **8** (step **S110**).

Suppose that a driver or user notices, for example, an abnormality in the FC power generation system **180** and presses a stop button displayed on the screen of the operation terminal **400** or terminal device. In that case, a travel stop command is issued in response to this press (step **S120**), and the processing performed by the control device proceeds to the next step **S130.** The control device continues the automatic travel control until the travel stop command is issued (No in step **S120,** step **S110**)**.**

In response to the travel stop command issued during the driving of the motor **70,** the control device determines whether the position of the work vehicle **200** identified by the positioning system **8** is within the field or outside the field (step **S130**). The storage device **7** described above may further store an environmental map of an area including one or more fields. In this embodiment, for example, in an environment where the reception status of satellite signals transmitted from GNSS satellites is good or relatively good, the GNSS receiver **8A** of the positioning system **8** performs positioning, and in an environment where the reception status is not good, the self-position estimation device **8C** performs self-position estimation to identify or estimate the position of the work vehicle **200.**

The control device determines whether the position of the work vehicle **200** is within the field or outside the field based on the position identified by the positioning system **8** and the environmental map stored in the storage device **7.** For example, the control device acquires position data indicating the position of the work vehicle **200** generated by the GNSS receiver **8A.** The position data includes information on the geographical coordinates of the position of the work vehicle **200.** The information on geographical coordinates includes, for example, information on latitude and longitude.

The environmental map stored in the storage device **7** includes information on the geographical coordinates of the area shown by the map. For example, the environmental map may include a plurality of area polygons corresponding to a plurality of areas, and further include attribute data indicating the attributes of objects located within each area. Each of the plurality of area polygons is defined by geographical coordinates.

The control device determines the area corresponding to the geographical coordinates indicated by the position data of the identified work vehicle **200** using the environmental map. The determined area corresponds to the area where the work vehicle **200** is located. In this manner, the control device is configured to determine whether the area corresponding to the geographical coordinates indicated by the position data is within the field or outside the field.

When the position of the work vehicle **200** is within the field (Yes in step **S130**), the control device stops the motor **70** after the second stop time from the travel stop command. For example, the control device stops the motor **70** by turning off the first switch **R1** (step **S140**). When the position of the work vehicle **200** is within the field, the control device may stop the motor **70** by turning off both the first switch **R1** and the second switch **R2** in response to the travel stop command. On the other hand, when the position of the work vehicle **200** is outside the field (No in step **S130**), the control device stops the motor **70** after the first stop time from the travel stop command (step **S150**). In other words, after receiving the travel stop command, the control device maintains the driving of the motor for a certain time (e.g., the first stop time) before stopping the motor **70.** After receiving the travel stop command, power supply to the motor **70** may be maintained for a predetermined time.

When the position of the work vehicle **200** is outside the field, the control device may perform the following operations instead of turning off each switch. For example, the ECU **72A** stops the control of the inverter device **72** after the first stop time elapses after receiving the travel stop command. Alternatively, after receiving the travel stop command, the FC system ECU **5** may instruct the control device **42** of the FC module **10** to stop power generation after the first stop time elapses, thus stopping the power generation of the FC module **10.**

In this manner, when a travel stop command is issued while performing automatic travel control, the control device stops the motor **70** at different timings depending on whether the position of the work vehicle **200** is within the field or not.

According to the stop control of the work vehicle in this embodiment, for a work vehicle traveling or working in the field, the control device immediately shuts off power supply to the motor by turning off the first switch in response to, for example, an emergency stop command, thus stopping the motor. Therefore, the work vehicle traveling or working in the field can be immediately stopped in emergency. Furthermore, by turning off both the first switch and the second switch in response to, for example, an emergency stop command, the control device completely shuts off power supply to the motor immediately, enabling appropriate stopping of the motor.

For a work vehicle traveling outside the field, the control device maintains the driving of the motor for the first stop time after receiving the travel stop command, allowing the work vehicle to continue traveling. In other words, the control device does not immediately shut off power supply to the motor in response to the travel stop command. This allows, for example, for moving the work vehicle to the shoulder of the road. After moving the work vehicle to the shoulder of the road, the control device may stop the motor by turning off the first switch and/or the second switch. In this manner, the work vehicle can be safely parked in a safe place.

The work vehicle in this embodiment is not limited to self-driving. In other words, even when the work vehicle is being manually driven, the control device can stop the motor at different timings depending on whether the position of the work vehicle is within the field or not when a travel stop command is issued during the driving of the motor, that is, during the travel of the work vehicle.

The configurations and operations of the above embodiments are exemplary, and the present disclosure is not limited to the above embodiments. For example, various embodiments may be appropriately combined to configure other embodiments.

As described above, the present disclosure includes the work vehicle described in the following Items.

### [Item 1]

A work vehicle comprising:
a fuel cell module including a fuel cell stack;
a motor connected to the fuel cell module;
a travel device to be driven by the motor;
a control device to control the motor; and
a positioning system,
wherein the control device:
   changes a manner of stopping the motor when a travel stop command is issued during driving of the motor, depending on whether a position of the work vehicle identified by the positioning system is within a field or not; and
   makes a time from when the travel stop command is issued until the motor stops shorter when the position of the work vehicle is within the field than when the position of the work vehicle is outside the field.

### [Item 2]

The work vehicle according to item 1, further comprising a first switch provided on a current path between the fuel cell module and the motor; wherein
the control device, in response to the travel stop command issued during driving of the motor:
determines whether the position of the work vehicle identified by the positioning system is within the field or outside the field,
when the position of the work vehicle is within the field, stops the motor by turning off the first switch; and
when the position of the work vehicle is outside the field, maintains driving of the motor for a certain time after receiving the travel stop command, and then stops the motor.

### [Item 3]

The work vehicle according to item 2, further comprising:
a battery connected to the fuel cell module and the motor; and
a second switch provided on a current path between the battery and the motor; wherein
when the position of the work vehicle is within the field, the control device stops the motor by turning off the first switch and the second switch in response to the travel stop command.

### [Item 4]

The work vehicle according to any one of items 1 to 3, wherein the positioning system includes a GNSS receiver.

### [Item 5]

The work vehicle according to any one of items 1 to 4, further comprising a storage device to store an environmental map of an area including one or more fields; wherein
the control device determines whether the position of the work vehicle is within the field or outside the field based on the position identified by the positioning system and the environmental map.

### [Item 6]

The work vehicle according to item 5, wherein the positioning system includes:
an external sensor to output sensor data indicating a distribution of objects existing around the work vehicle; and
a self-position estimation device to estimate the position of the work vehicle by matching the sensor data with the environmental map.

### [Item 7]

The work vehicle according to any one of items 1 to 6, wherein the control device performs automatic travel control of the work vehicle based on an estimated position of the work vehicle.

### [Item 8]

The work vehicle according to item 7, wherein when the travel stop command is issued during the automatic travel control, the control device stops the motor at different timings depending on whether the position of the work vehicle is within the field or not.

### [Item 9]

The work vehicle according to any one of items 1 to 8, wherein the work vehicle is an agricultural machine.

### INDUSTRIAL APPLICABILITY

The technology of this disclosure can be applied to agricultural machines such as tractors, harvesters, rice planters, riding management vehicles, vegetable transplanting machines, mowers, seeders, fertilizer applicators, or agricultural robots.

### REFERENCE SIGNS LIST

**1:** User interface, **2:** Operation device, **3:** Main ECU, **4:** Main meter, **5:** FC system ECU, **6:** FC meter, **7:** Storage device, **8:** Positioning system, **8A:** GNSS receiver, **8B**: External sensor, **8C:** Self-position estimation device, **10:** Fuel cell module, **11:** FC stack, **40:** Boost circuit, **34:** Radiator device, **40:** Boost circuit, **50:** Fuel tank, **51:** Tank case, **70:** Motor, **71:** Output shaft, **72:** Inverter device, **72A:** Control device, **74:** Power transmission system, **76:** Power take-off (PTO) shaft, **80:** Battery pack, **81:** First DC-DC converter, **82:** Second DC-DC converter, **83:** Storage battery, **85:** Air conditioning compressor, **86:** Heater, **100:** Work vehicle, **102:** Vehicle frame, **102A:** Front frame, **102B:** Transmission case, **104:** Wheel, **104F:** Front wheel, **104R:** Rear wheel, **107:** Driver seat, **120:** Mounting frame

## Claims

1. A work vehicle comprising:
a fuel cell module including a fuel cell stack;
a motor connected to the fuel cell module;
a travel device to be driven by the motor;
a control device to control the motor; and
a positioning system,
wherein the control device:
changes a manner of stopping the motor when a travel stop command is issued during driving of the motor, depending on whether a position of the work vehicle identified by the positioning system is within a field or not; and
makes a time from when the travel stop command is issued until the motor stops shorter when the position of the work vehicle is within the field than when the position of the work vehicle is outside the field.

2. The work vehicle according to claim 1, further comprising a first switch provided on a current path between the fuel cell module and the motor; wherein
the control device, in response to the travel stop command issued during driving of the motor:
determines whether the position of the work vehicle identified by the positioning system is within the field or outside the field;
when the position of the work vehicle is within the field, stops the motor by turning off the first switch; and
when the position of the work vehicle is outside the field, maintains driving of the motor for a certain time after receiving the travel stop command, and then stops the motor.

3. The work vehicle according to claim 2, further comprising:
a battery connected to the fuel cell module and the motor; and a second switch provided on a current path between the battery and the motor; wherein
when the position of the work vehicle is within the field, the control device stops the motor by turning off the first switch and the second switch in response to the travel stop command.

4. The work vehicle according to any one of claims 1 to 3, wherein the positioning system includes a GNSS receiver.

5. The work vehicle according to any one of claims 1 to 4, further comprising a storage device to store an environmental map of an area including one or more fields; wherein
the control device determines whether the position of the work vehicle is within the field or outside the field based on the position identified by the positioning system and the environmental map.

6. The work vehicle according to claim 5, wherein the positioning system includes:
an external sensor to output sensor data indicating a distribution of objects existing around the work vehicle; and
a self-position estimation device to estimate the position of the work vehicle by matching the sensor data with the environmental map.

7. The work vehicle according to any one of claims 1 to 6, wherein the control device performs automatic travel control of the work vehicle based on an estimated position of the work vehicle.

8. The work vehicle according to claim 7, wherein when the travel stop command is issued during the automatic travel control, the control device stops the motor at different timings depending on whether the position of the work vehicle is within the field or not.

9. The work vehicle according to any one of claims 1 to 8, wherein the work vehicle is an agricultural machine.
